(19) Europäisches Patentamt
European Patent Office
Office européen des brevets

(11) Veröffentlichungsnummer: **0 185 878**
**A1**

(12) **EUROPÄISCHE PATENTANMELDUNG**

(21) Anmeldenummer: **85113493.2**

(22) Anmeldetag: **24.10.85**

(51) Int. Cl.[4]: **C 08 J 7/04**
C 09 D 3/58, C 08 G 18/10
B 60 K 15/02

(30) Priorität: **22.12.84 DE 3447022**

(43) Veröffentlichungstag der Anmeldung:
**02.07.86 Patentblatt 86/27**

(84) Benannte Vertragsstaaten:
**BE CH DE FR GB LI NL SE**

(71) Anmelder: **HÜLS AKTIENGESELLSCHAFT**
**Patentabteilung / PB 15 - Postfach 13 20**
**D-4370 Marl 1(DE)**

(72) Erfinder: **Gerdes, Ernst**
**Henkelbrey 6**
**D-4270 Dorsten 11(DE)**

(72) Erfinder: **Mutzberg, Friedhelm**
**Gleiwitzer Strasse 55**
**D-4330 Mülheim/Ruhr(DE)**

(72) Erfinder: **Pellengahr, Franz**
**Max-Reger-Strasse 30**
**D-4370 Marl(DE)**

(54) **Kraftstoffbehälter aus Polyethylen mit verringerter Durchlässigkeit.**

(57) Die Durchlässigkeit von Kraftstofftanks und -kanistern läßt sich durch Überzüge von bestimmten Epoxidharzlacken entscheidend herabsetzen.

Eine bevorzugte Dreikomponenten-Lackierung enthält
A) ein Epoxidharz
B) einen Härter auf Aminbasis
C) einen Flexibilisator auf Grundlage eines Ether- und Urethangruppen enthaltenden Isocyanatpräpolymeren.

EP 0 185 878 A1

Kraftstoffbehälter aus Polyethylen mit verringerter Durchlässigkeit

Es ist bekannt, Kraftstoffbehälter wie Kanister oder Fahrzeugtanks aus Polyethylen zu fertigen. Besonders der zweite Verwendungszweck gewinnt an Bedeutung, weil man bestrebt ist, die Kraftstofftanks in weniger zugänglichen Toträumen der Karosserie unter möglichster Raumausnutzung unterzubringen; hierfür muß man ihnen komplizierte Formen geben, deren Fertigung aus Eisenblech teuer oder nicht möglich wäre, aber auf dem Wege des Extrusionsblasens durchaus möglich ist. Besonders vorteilhaft wirkt sich zusätzlich noch das geringe Gewicht des Polyethylen-Kraftstofftanks aus.

Nachteilig ist, daß die Kunststoffe, wie auch das hier verwendete Polyethylen, eine gewisse Durchlässigkeit für die Kraftstoffe aufweisen.

Man hat daher vorgeschlagen, die Durchlässigkeit durch Fluorierung oder Bestrahlung der Behälter zu mindern. Bekannt ist auch die Sulfonierung (DE-AS 19 53 371), die aber wegen der erforderlichen Austreibung des überschüssigen Schwefeltrioxids und der nachfolgenden Neutralisation nicht frei von aufwendigen Verfahrensschritten ist.

Daher kann die Aufgabe, die Durchlässigkeit der Polyethylenkraftstoffbehälter zu verringern, noch nicht als voll befriedigend gelöst angesehen werden.

Naheliegend ist zwar der Gedanke, die Behälter durch eine einfache Lackierung zu verbessern. Man findet aber, daß Lacksysteme auf Grundlage von Polyvinylidenfluorid, Polyvinylalkohol oder Polyamid 6 mit verschiedenen Primern entweder unzureichende Sperreigenschaften oder nach Einwirkung des Kraftstoffes ungenügende Haftung zeigen.

Es war daher durchaus überraschend, daß man die gestellte Aufgabe durch eine Dreikomponenten-Lackierung ohne Primer oder Haftvermittler in der aus den Patentansprüchen ersichtlichen Weise lösen kann.

Als Polyethylen läßt sich prinzipiell ein jedes erfindungsgemäß verbessern, das zum Extrusionsblasen von Kraftstoffbehältern ausreichend geeignet ist. Bevorzugt verwendet man HDPE mit folgenden Kennzahlen: Dichte 0,935 bis 0,950 $g/cm^3$; Schmelzindex 190/21,6 ist $<$ 10 g/10 min. Insbesondere geeignet ist ein solches HDPE, welches die Kennzahlen aufweist: Dichte 0,940 bis 0,945 $g/cm^3$; Schmelzindex 190/21,6 = 1 bis 7 g/10 min.

Die erfindungsgemäße Dreikomponenten-Lackierung besteht aus einem Epoxidharz, einem Härter auf Aminbasis und einem Flexibilisator.

Ein geeignetes Epoxidharz A) enthält mehr als eine Epoxidgruppe im Molekül. Bevorzugt ist ein flüssiger Diglycidether, hergestellt aus Epichlorhydrin und Diphenylolpropan (Bisphenol A). Die Epoxidäquivalentgewichte sollen zwischen 150 und 280 liegen, bevorzugt zwischen 185 und 195.

Geeignete Härtungsmittel B) sind, um die Härtung zweckmäßig bei Raumtemperatur zu erlauben, auf Aminbasis aufgebaut. Zur Erzielung einer gründlichen Vernetzung, wie sie für die Kraftstoffundurchlässigkeit erwünscht ist, empfiehlt es sich, Amine einzusetzen, welche Bestandteil größerer Moleküle geworden sind, z. B. durch eine Vorreaktion. Geeignet sind daher Umsetzungsprodukte bestimmter Amine mit im Unterschuß zugefügten Epoxidharzen; die restlichen Aminogruppen dieser Vorvernetzungsprodukte sind dazu bestimmt, mit dem Epoxidharz A) den gewünschten Duroplasten aufzubauen. Generell brauchbar sind Umsetzungsprodukte aus einem Epoxidharz, wie es als Komponente A) definiert ist, einerseits und aus einem oder mehreren Diaminen der Formeln I und II

I $H_2N-CH_2-R-NH_2$

II $H_2N-R-CH_2-R-NH_2$ andererseits

wobei R ein subtituierter Alkylen- oder Cycloalkylenrest mit 5 bis 10 C-Atomen ist, mit Molekulargewichten zwischen 100 und 200.

Bevorzugt verwendet man 2,2,4-Trimethylhexamethylendiamin (TMD), Xylidendiamine oder Diamine, die ein oder zwei Cyclohexanringe enthalten, wie z. B. 3-Aminomethyl-3,5,5-cyclohexylamin (Isophorondiamin, IPD) oder 4,4'-Diamino-3,3'-dimethyldicyclohexylmethan.

Besonders bewährt als Härtungsmittel hat sich für den beanspruchten Zweck eine Umsetzungskombination, wie man sie erhält, wenn man 55 Gewichtsteile 3-Aminomethyl-3,5,5-trimethylcyclohexylamin, 45 Gewichtsteile eines Gemisches aus 2,2,4- und 2,4,4-Trimethylhexamethylendiamin und 40 Gewichtsteile eines Epoxidharzes mit einem Epoxidäquivalentgewicht

von etwa 190 vorreagieren läßt und eine als Beschleuniger wirkende Lösung aus 12 Gewichtsteilen Salicylsäure in 88 Gewichtsteilen Benzylalkohol hinzufügt.

Im beanspruchten Anwendungsfalle ist eine gewisse Flexibilität des Lackfilmes erwünscht, um eine ausreichende Dehnfähigkeit und verbesserte Schlag- und Stoßfestigkeit zu erhalten. Zu diesem Zweck kombiniert man den aus den Komponenten A) und B) bestehenden Epoxidharzlack mit dem Flexibilisator C). Als Flexibilisator C) eignen sich Isocyanatpräpolymere. Besonders bewährt sind solche, die Ether- und Urethangruppen enthalten. Ein solches flüssiges Produkt befindet sich unter der Bezeichnung Desmocap 11 (Bayer) im Handel. Die vernetzungsfähigen NCO-Gruppen dieser Vorpolymeren reagieren unter Vernetzung mit Aminen, d. h. mit dem im Überschuß über die Epoxidgruppen der Komponente A) eingesetzten Diamin aus Komponente B). Die besten Ergebnisse erhält man mit cycloaliphatischen Diaminen.

Die optimale Menge des Flexibilisators C) wird empirisch ermitteltund kann beispielsweise 3 bis 10 Gew.-%, bezogen auf die gesamte Formulierung, Desmocap 11 betragen.

Durch die Umsetzung eines solchen Flexibilisators mit den Aminen aus der Epoxidlack-Kombination verknüpft man in vorteilhafter Weise die gute Flexibilität und Abriebfestigkeit der Polyurethanharze mit der Chemikalienbeständigkeit der amingehärteten Epoxidharze. Ein weiterer positiver Aspekt ist eine verbesserte Haftung.

Die Herstellung des Systems erfolgt dadurch, daß die

Komponenten A) und C) miteinander gemischt werden. Vor der Applikation (Topfzeit ca. 25 Minuten) wird die Härterkomponente B) dazugegeben.

Grundsätzlich kommt jede Auftragungsart in Betracht, so z. B. das Tauchen. Da es erwünscht ist, nach dem Blasen der Behälter in einer Produktionslinie zu bleiben, ist der Auftrag mit einem Zweikomponenten-Spritzgerät besonders vorteilhaft. Nach ca. 12 Stunden Raumtemperatur ist die Beschichtung klebfrei gehärtet, und nach ca. 7 Tagen ist die Durchhärtung beendet; Temperaturerhöhung beschleunigt diese Härtungsvorgänge, so daß ein beschichteter Tank, bei 80°C behandelt, nach etwa 30 Minuten einbaufähig ist.

Es ist zweckmäßig, die Oberfläche der Kraftstoffbehälter vor dem Lackauftrag zu oxidieren. Hierfür sind die an sich bekannten Verfahren geeignet, beispielsweise die Niederdruck-Glimmentladung, die Corona-Entladung, das Eintauchen in erwärmte Chromschwefelsäure und das Beflammen. Man kann die Lackschicht nach entsprechender Vorbehandlung auf die innere und/oder äußere Oberfläche des Behälters auftragen.

Die erfindungsgemäße Lackierung bewirkt gegenüber Otto- und Dieselkraftstoff eine Sperrwirkung von 60 bis 80 % und darüber, verglichen mit einem ungehandelten Behälter.

<u>Beispiel</u>

Man stellt einen Lackansatz her wie folgt:

A) 59 Gewichtsteile eines Epoxidharzes mit einem

Epoxidäquivalentgewicht zwischen 185 und 195, entsprechend Epoxidwerten von 0,51 bis 0,54, werden mit 7 Gewichtsteilen eines Flexibilisators, welcher als Präpolymer Urethan- und Ethergruppen enthält, gemischt.
Geeignete Epoxidharze sind z. B. Epikote 828 (Shell), DER 331 (DOW), Rütapox 0164 (Bakelite).

C) Als Flexibilisator ist das "Democap 11" (Bayer) geeignet; 7 Gewichtsteile.

In diese Mischung aus A) und C) rührt man B) ein:

B) 34 Gewichtsteile einer vorreagierten Mischung aus

| | | |
|---|---|---|
| 7,79 | Gewichtsteilen | 3-Aminomethyl-3,5,5-trimethylcyclohexylamin, |
| 6,38 | Gewichtsteilen | Gemisch aus 2,2,4- und 2,4,4-Trimethylhexamethylendiamin, |
| 5,67 | Gewichtsteilen | Epoxidharz wie A) |
| 1,70 | Gewichtsteilen | Salicylsäure |
| 12,46 | Gewichtsteilen | Benzylalkohol |

Ein geeignetes Erzeugnis ist z. B. das "IPD/TMD-Blend SE". Hersteller von Isophorondiamin und Trimethylhexamethylendiamin sind die Chemische Werke Hüls.

Man beflammt geblasene Kraftstoffbehälter aus HDPE der Dichte 0,945 g/cm$^3$ mit Schmelzindex 190/21,6 = 5 g/10 Minuten und einem Rußgehalt von 0,1 Gew.-% oberflächlich unmittelbar vor dem Lackauftrag, wobei die Temperatur der Oberfläche oberhalb 60 °C liegt. Man trägt das vorbereitete Gemisch aus A) und C) einerseits und B) andererseits mit einer Zweikomponenten-Spritzpistole auf und härtet bei erhöhter

Temperatur. Die Schichtdicke beträgt nach der Härtung 50 µm.

Die Durchlässigkeit des derart behandelten Kraftstoffbehälters gegenüber Kraftstoff wird im Vergleich zu einem unbehandelten Behälter um ca. 80 % verringert. Eine Schichtdicke von etwa 100 µm verringert die Durchlässigkeit um weit über 80 %.

Patentansprüche:

1. Kraftstoffbehälter aus Polyethylen mit verringerter Durchlässigkeit,
gekennzeichnet durch
eine Dreikomponenten-Lackierung aus
A) einem Epoxidharz
B) einem Härter auf Aminbasis
C) einem Flexibilisator.

2. Kraftstoffbehälter nach Patentanspruch 1,
gekennzeichnet durch
ein Epoxidäquivalentgewicht der Komponente A) von 150 bis 280.

3. Kraftstoffbehälter nach Patentanspruch 1 bis 2,
gekennzeichnet durch
einen Härter B) auf Grundlage von Isophorondiamin und Trimethylhexamethylendiamin.

4. Kraftstoffbehälter nach Patentanspruch 1 bis 3,
gekennzeichnet durch
einen Flexibilisator auf Grundlage eines Ether- und Urethangruppen enthaltenden Isocyanatpräpolymeren.

5. Kraftstoffbehälter nach Patentanspruch 1 bis 4,
gekennzeichnet durch
ein etwa stöchiometrisches Verhältnis der Komponenten A) und B) innerhalb der Dreikomponenten-Lackierung.

6. Kraftstoffbehälter nach Patentanspruch 1 bis 5, gekennzeichnet durch einen Gewichtsanteil der Komponente C) in der Gesamtformulierung von 3 bis 10 Gew.-%

7. Kraftstoffbehälter nach Patentanspruch 1 bis 6, dadurch gekennzeichnet, daß die Behälteroberfläche vor der Lackierung oxidiert worden ist.

Europäisches Patentamt

0185878
Nummer der Anmeldung

# EUROPÄISCHER RECHERCHENBERICHT

EP 85 11 3493

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| | | | C 08 J 7/04<br>C 09 D 3/58<br>C 08 G 18/10<br>B 60 K 15/02 |
| Y | CHEMICAL ABSTRACTS, Band 95, 2. November 1981, Seite 84, Zusammenfassung Nr. 152272q, Columbus, Ohio, US; & JP - A - 81 81 344 (MITSUBISHI PETROCHEMICAL CO., LTD.) 03.07.1981<br>* Zusammenfassung *<br>--- | 1,4,6<br>7 | |
| Y | DE-A-2 753 830 (BUDALAKK FESTEK-ES MÜGANTAGYAR)<br>* Patentansprüche 1,2; Seite 4, Zeilen 9-18; Seite 6, Zeile 7 - Seite 8, Zeile 18; Beispiel 1; Seite 12, Zeilen 19,20 *<br>--- | 1,4,6<br>7 | |
| A | DE-A-1 920 822 (REICHHOLD-ALBERT-CHEMIE)<br>* Patentansprüche; Seite 1; Seite 5, Zeile 23 - Seite 6, Zeile 30; Seite 12, Zeilen 11-14; Beispiel 1 *<br>--- | 1-5 | RECHERCHIERTE SACHGEBIETE (Int Cl 4)<br>C 08 J<br>C 08 G |
| A | GB-A- 842 905 (PLAX)<br>* Patentansprüche 1-3,8; Seite 1, Zeilen 21-77; Seite 2, Zeilen 33-48 *<br>----- | 1 | |

Der vorliegende Recherchenbericht wurde für alle Patentansprüche erstellt

| Recherchenort | Abschlußdatum der Recherche | Prüfer |
|---|---|---|
| DEN HAAG | 13-02-1986 | HALLEMEESCH A.D. |

KATEGORIE DER GENANNTEN DOKUMENTE

X von besonderer Bedeutung allein betrachtet
Y von besonderer Bedeutung in Verbindung mit einer anderen Veröffentlichung derselben Kategorie
A technologischer Hintergrund
O nichtschriftliche Offenbarung
P Zwischenliteratur
T der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82